# EUROPEAN PATENT APPLICATION

(11) **EP 4 641 269 A1**
(43) Date of publication of application: **29.10.2025**
(21) Application number: 24171962.4
(22) Date of filing: 23.04.2024
(51) Int. Cl.: G02B 6/122, G02B 6/124, G02B 6/12

(54) **OPTICAL WAVEGUIDE**

(71) Applicant: Nokia Solutions and Networks Oy, 02610 Espoo (FI)
(72) Inventor: Aimone, Alessandro, 10179 Berlin (DE)
(74) Representative: DREISS Patentanwälte PartG mbB

(57) **Abstract**

An optical waveguide comprising at least a first group of alternating regions of different refractive index arranged along a longitudinal axis of the waveguide effecting two transmission gaps in a transmission spectrum of the waveguide.

## Description

### Field of the Disclosure

Various example embodiments relate to an optical waveguide.

### Background

In some conventional approaches, optical components used for optical data transmission, such as, e.g., Mach-Zehnder modulators (MZM), can easily reach physical lengths in the order of centimeters. Besides a material cost that directly increases with physical dimensions, the comparatively large size of such conventional components makes it difficult to package them, e.g., in compact form factors. In some conventional approaches, such comparatively large conventional modulators are comparatively slow.

In some conventional approaches, optical transmitters use Mach-Zehnder modulators for modulating information onto light propagating through a waveguide. In some conventional approaches, these components exploit high-speed electro-optical effects to accelerate or slow down an optical wave in one of the two interferometer arms of the Mach-Zehnder modulators, which results in a relative phase difference between the two interferometer arms, and ultimately into constructive or destructive interference at the component's output, thus effecting the modulation.

In some conventional approaches, the electro-optical effects are comparatively weak, and a speed of an optical wave can only be changed by a small percentage around its nominal value (i.e., as characterized by the optical wave speed when no electrical field is applied). In order to accumulate sufficient relative propagation time difference (and relative phase difference) in between the two interferometer arms, in some conventional approaches, the interaction length for an interaction between the optical field and the electrical field should exceed a predetermined minimum length, which means that the modulator or interferometer arms may comprise physical dimensions in the millimeter range or even of a few centimeters.

### Summary

Various example embodiments of the disclosure are set out by the independent claims. The example embodiments and features, if any, described in this specification, that do not fall under the scope of the independent claims, are to be interpreted as examples useful for understanding various example embodiments of the disclosure.

Some example embodiments relate to an optical waveguide comprising at least a first group of alternating regions of different refractive index arranged along a longitudinal axis of the waveguide effecting, e.g., configured to cause, two transmission gaps in a transmission spectrum of the waveguide. In some examples, this may enable to establish a slow-wave or slow-light regime in a wavelength range between the two transmission gaps, which, in some examples, may contribute to increase a modulation efficiency, thus, e.g., enabling to reduce the physical dimensions, e.g., when using the optical waveguide according to the disclosure for an electro-optic modulator.

In other words, in some examples, a nominal speed of optical waves traveling through the waveguide may be reduced, e.g., by increasing a group refractive index. In some examples, e.g., in wavelength ranges close to, e.g., between, the transmission gaps, the waveguide becomes comparatively, e.g., highly, dispersive, and thus, the speed of an optical wave associated with this wavelength range may be, e.g., strongly, reduced.

In some examples, this enables to increase a relative speed change, e.g., for applications in electro-optic modulators, and an interaction length may thus be reduced.

Alternatively, in some examples, applying the principle according to the disclosure may be seen as increasing an electro-optic efficiency, e.g., when using the waveguide according to the disclosure for an electro-optic modulator.

In some examples, a plurality of different configurations, e.g., at least for the first group of alternating regions of different refractive index may be provided, e.g., to effect the two transmission gaps in a transmission spectrum of the waveguide. In other words, according to the principle of the disclosure, there are several variants or examples possible for configuring at least the first group of alternating regions of different refractive index to cause the two transmission gaps. Further details related to such variants or examples are provided further below.

In some examples, the two transmission gaps characterize wavelength ranges wherein a transmission factor, e.g., scattering parameter S₂₁, of the waveguide is below a predetermined first threshold.

In some examples, the two transmission gaps are within a predetermined wavelength range, e.g., the C-band.

In some examples, the two transmission gaps are separate from each other, e.g., are non-adjacent. In other words, in some examples, there is a non-vanishing, e.g., intermediate, wavelength range arranged between the two transmission gaps. In some examples, in this intermediate wavelength range, a transmission factor, e.g., scattering parameter S₂₁, of the waveguide exceeds a predetermined second threshold, which may, e.g., be larger than the first predetermined threshold. In some examples, this intermediate wavelength range may be used for transmitting one or more optical signals through the waveguide, wherein, for example, the above mentioned slow-wave regime may be attained.

In some examples, the optical waveguide further comprises a second group of alternating regions of different refractive index arranged along the longitudinal axis of the waveguide. In some examples, the second group of alternating regions of different refractive index may, e.g., also, contribute to effect the two transmission gaps, e.g., causing the optical waveguide to be configured to provide the two transmission gaps.

In some examples, at least one of the first group or the second group of alternating regions of different refractive index arranged along the longitudinal axis of the waveguide is asymmetric with respect to the longitudinal axis, e.g., a dimension along which light can be transmitted via the optical waveguide. In other words, in some examples, e.g., by breaking a symmetry with respect to the alternating regions of different refractive index and their relative position to the longitudinal axis, the two transmission gaps may be effected, e.g., the optical waveguide can be configured to exhibit the two transmission gaps.

In some examples, the alternating regions of different refractive index of at least one of the first group or the second group are periodic, may, e.g., have a constant pitch along the longitudinal axis.

Note, however, that in some other examples, at least a part of the alternating regions of different refractive index of at least one of the first group or the second group may, at least partly, be aperiodic or may, e.g., not comprise a strict periodic arrangement. In other words, in some examples, a variable pitch - at least to some extent - may also be possible.

In some examples, at least one of the first group or the second group comprises a, for example periodic, grating.

In some examples, the grating comprises a plurality of openings in a waveguide structure or material.

In some examples, the first group comprises a first grating, wherein the second group comprises a second grating.

In some examples, the first grating comprises a first pitch, wherein the second grating comprises a second pitch, which is different from the first pitch.

In some examples, the first grating and the second grating comprise at least one different geometrical property. In some examples, a geometrical property of at least one of the first grating and the second grating may comprise at least one of: a) a pitch (e.g., distance between two neighboring elements, e.g., openings, of the grating), or b) a width, e.g., width of an opening, e.g., measured along the longitudinal axis, e.g., characterized by an "X"-coordinate, or c) a length, e.g., length of an opening, e.g., measured in a dimension orthogonal to the longitudinal axis, and, e.g., along a surface plane of the waveguide, e.g., characterized by an "Y"-coordinate, or d) a depth, e.g., of an opening, e.g., measured in a direction orthogonal to the width and the length, e.g., characterized by a "Z"-coordinate, or e) a shift, e.g., along the length coordinate, e.g., Y-axis, wherein, for example, a vanishing Y-shift may be associated with a symmetric arrangement of the respective grating with respect to the longitudinal axis, and wherein, for example, a non-vanishing Y-shift may be associated with an asymmetric arrangement of the respective grating with respect to the longitudinal axis.

In some examples, the first grating and the second grating are interleaved, e.g., may at least partly extend along a same coordinate range along at least one of the X-axis or the Y-axis.

In some examples, at least one of the first group or the second group comprises a cladding.

In some examples, the optical waveguide comprises, e.g., is made using, at least one of the following technologies: a) thin-film Lithium Niobate, or b) Indium Phosphide, or c) Silicon Photonics.

Some examples relate to an electro-optic modulator comprising at least one optical waveguide according to the disclosure.

### Brief Description of the Figures

- Fig. 1: schematically depicts a simplified block diagram according to some examples,
- Fig. 2: schematically depicts a simplified transmission diagram according to some examples,
- Fig. 3: schematically depicts a simplified block diagram according to some examples,
- Fig. 4A: schematically depicts a simplified unit cell according to some examples,
- Fig. 4B: schematically depicts a simplified waveguide according to some examples,
- Fig. 4C: schematically depicts a simplified dispersion diagram according to some examples,
- Fig. 5A: schematically depicts a simplified unit cell according to some examples,
- Fig. 5B: schematically depicts a simplified waveguide according to some examples,
- Fig. 5C: schematically depicts a simplified dispersion diagram according to some examples,
- Fig. 5D: schematically depicts a simplified transmission diagram according to some examples,
- Fig. 6A: schematically depicts aspects of a first grating according to some examples,
- Fig. 6B: schematically depicts aspects of a second grating according to some examples,
- Fig. 6C: schematically depicts aspects of gratings according to some examples,
- Fig. 7: schematically depicts aspects of gratings according to some examples,
- Fig. 8A: schematically depicts a cross-sectional view of a waveguide according to some examples at a first coordinate,
- Fig. 8B: schematically depicts a cross-sectional view of the waveguide of Fig. 8A at a second coordinate,
- Fig. 8C: schematically depicts a top view the waveguide of Fig. 8A,
- Fig. 8D: schematically depicts a cross-sectional side view of the waveguide of Fig. 8A,
- Fig. 9A: schematically depicts a cross-sectional view of a waveguide according to some examples at a first coordinate,
- Fig. 9B: schematically depicts a cross-sectional view of the waveguide of Fig. 9A at a second coordinate,
- Fig. 9C: schematically depicts a top view the waveguide of Fig. 9A,
- Fig. 9D: schematically depicts a cross-sectional side view of the waveguide of Fig. 9A,
- Fig. 10: schematically depicts a simplified diagram of an electro-optic modulator according to some examples,
- Fig. 11: schematically depicts a simplified waveguide according to some examples.

### Description of some Example Embodiments

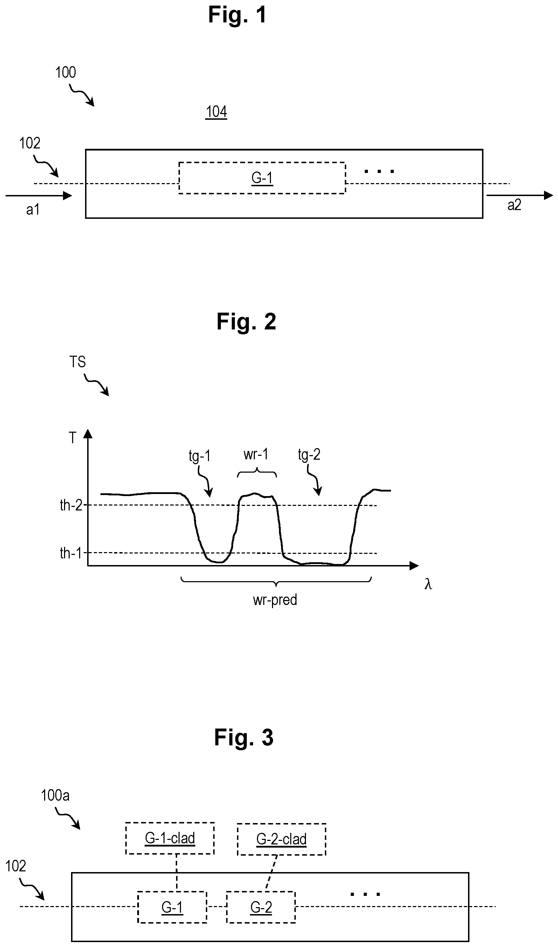

Some examples, see, for example, Fig. 1, relate to an optical waveguide 100 comprising at least a first group G-1 of alternating regions of different refractive index arranged along a longitudinal axis 102 of the waveguide 100 effecting, e.g., configured to cause, two transmission gaps tg-1, tg-2 (Fig. 2) in a transmission spectrum TS of the waveguide 100.

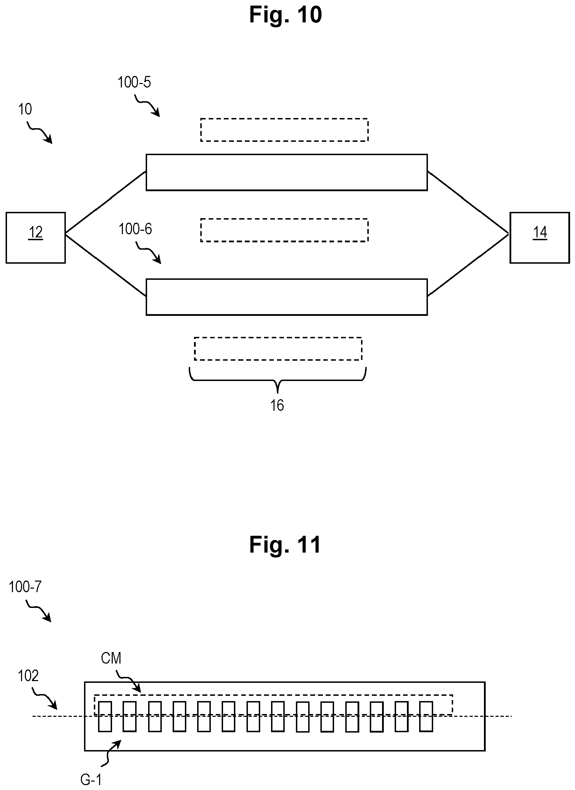

In some examples, Fig. 2, this may enable to establish a slow-wave or slow-light regime in a wavelength range wr-1 between the two transmission gaps tg-1, tg-2, e.g., in an intermediate wavelength range wr-1, which, in some examples, may contribute to increase a modulation efficiency, thus, e.g., enabling to reduce the physical dimensions, e.g., when using the optical waveguide 100 according to the disclosure for an electro-optic modulator 10 (see Fig. 10, explained further below).

In other words, in some examples, a nominal speed of optical waves traveling through the waveguide 100 may be reduced, e.g., by increasing a group refractive index. In some examples, Fig. 2, e.g., in wavelength ranges close to, e.g., between, the transmission gaps tg-1, tg-2, the waveguide 100 becomes comparatively, e.g., highly, dispersive, and thus, the speed of an optical wave associated with, e.g., the wavelength range wr-1 may be, e.g., strongly, reduced.

In some examples, this enables to increase a relative speed change, e.g., for applications in electro-optic modulators, and an interaction length may thus be reduced.

Alternatively, in some examples, applying the principle according to the disclosure may be seen as increasing an electro-optic efficiency, e.g., when using the waveguide 100 according to the disclosure for an electro-optic modulator.

In some examples, Fig. 1, the waveguide 100 is arranged on a substrate 104.

Arrow a1 of Fig. 1 symbolizes light, e.g., as output by a light source (not shown), provided at a first axial end section to the optical waveguide 100. Arrow a2 of Fig. 1 symbolizes light as may be obtained at a second axial end section, e.g., the light a1 after having traveled through the optical waveguide 100.

In some examples, Fig. 1, a plurality of different configurations, e.g., at least for the first group G-1 of alternating regions of different refractive index may be provided, e.g., to effect the two transmission gaps tg-1, tg-2 (Fig. 2) in the transmission spectrum TS of the waveguide 100. In other words, according to the principle of the disclosure, there are several variants or examples possible for configuring at least the first group G-1 of alternating regions of different refractive index to cause the two transmission gaps tg-1, tg-2. Further details related to such variants or examples are provided further below.

In some examples, see Fig. 2, depicting a transmission factor T over the wavelength λ, the two transmission gaps tg-1, tg-2 characterize wavelength ranges wherein a transmission factor, e.g., scattering parameter S₂₁, of the waveguide 100 (Fig. 1) is below a predetermined first threshold th-1.

In some examples, Fig. 2, the two transmission gaps tg-1, tg-2 are within a predetermined wavelength range wr-pred, e.g., ranging from 1530 nanometer (nm) to 1565 nm, e.g., the C-band.

In some examples, Fig. 2, the two transmission gaps tg-1, tg-2 are separate from each other, e.g., are non-adjacent. In other words, in some examples, there is a non-vanishing, e.g., intermediate, wavelength range wr-1 arranged between the two transmission gaps tg-1, tg-2. In some examples, in this intermediate wavelength range wr-1, a transmission factor T, e.g., scattering parameter S₂₁, of the waveguide exceeds a predetermined second threshold th-2, which may, e.g., be larger than the first predetermined threshold th-1 (or scattering parameter S₂₁).

In some examples, Fig. 2, the intermediate wavelength range wr-1 may be used for transmitting one or more optical signals (see, for example, arrow a1 of Fig. 1) through the waveguide 100, wherein, for example, the above mentioned slow-wave regime may be attained.

In some examples, Fig. 3, the optical waveguide 100a further comprises a second group G-2 of alternating regions of different refractive index arranged along the longitudinal axis 102 of the waveguide, e.g., in addition to the first group G-1. In some examples, the second group G-2 of alternating regions of different refractive index may, e.g., also, contribute to effect the two transmission gaps tg-1, tg-2 (Fig. 2), e.g., causing the optical waveguide 100a (Fig. 3) to be configured to provide the two transmission gaps tg-1, tg-2.

In some examples, Fig. 3, at least one of the first group G-1 or the second group G-2 of alternating regions of different refractive index arranged along the longitudinal axis of the waveguide is asymmetric with respect to the longitudinal axis, e.g., a dimension along which light can be transmitted via the optical waveguide 100a. In other words, in some examples, e.g., by breaking a symmetry with respect to the alternating regions of different refractive index and their relative position to, e.g., the longitudinal axis, the two transmission gaps tg-1, tg-2 may be effected, e.g., the optical waveguide 100a can be configured to exhibit the two transmission gaps.

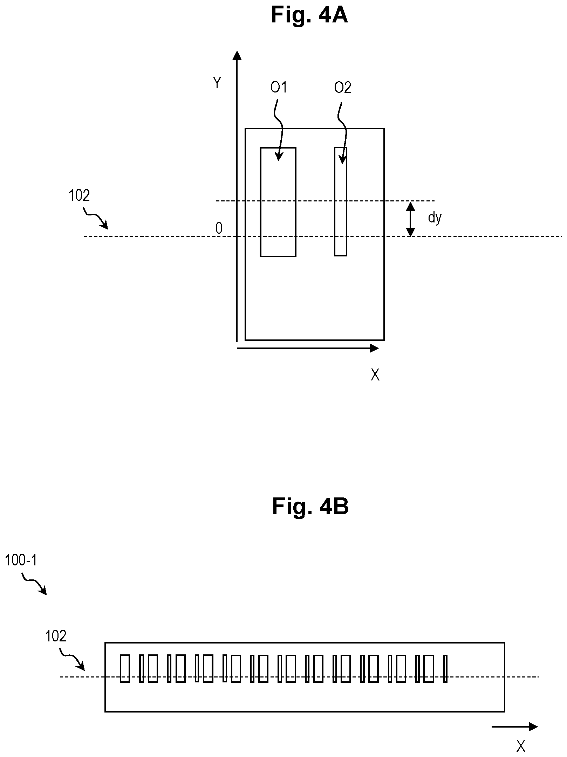

In this regard, Fig. 4A depicts an example of a unit cell characterizing regions of different refractive index, which, in some examples, may, e.g., be implemented in the form of openings within the waveguide 100a (Fig. 3). As can be seen from Fig. 4A, the unit cell comprises two openings O1, 02. In some examples, the openings O1, O2 effect a local change of the refractive index of a waveguide 100-1, see Fig. 4B, which comprises a plurality of the unit cells of Fig. 4A, e.g., to form at least one group G-1, G-2 of alternating regions of different refractive index arranged along the longitudinal axis 102 of the waveguide 100-1.

As can also be seen from Fig. 4A, 4B, the openings O-1, O-2 are arranged asymmetrically with respect to a reference coordinate of Y=0 on the Y-axis, which coordinate Y=0 may, e.g., correspond with the longitudinal axis 102. In other words, the openings O-1, O-2 are arranged such in the unit cell of Fig. 4A that their respective centroids (not shown) are at an Y-coordinate greater than zero. In some examples, a non-vanishing Y-shift effects, e.g., causes, the two transmission gaps tg-1, tg-2 in the transmission spectrum of the waveguide. In other words, in some examples, by providing a non-vanishing Y-shift, e.g., a Y-shift exceeding a predetermined threshold, the waveguide can be configured to exhibit the two transmission gaps tg-1, tg-2 in the transmission spectrum of the waveguide.

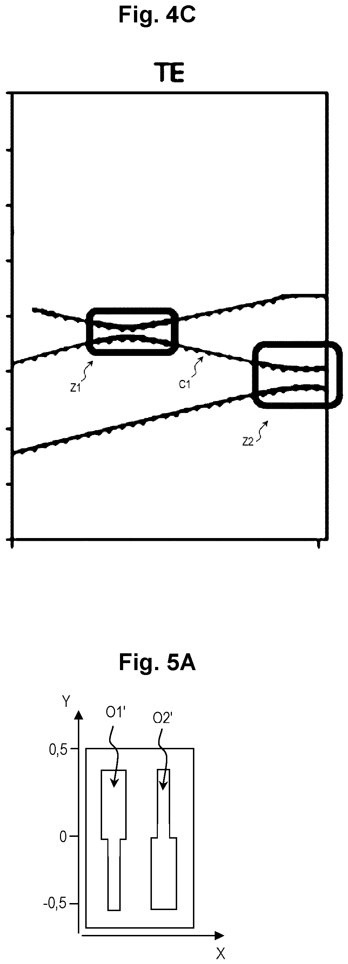

Fig. 4C depicts a dispersion diagram, e.g., showing a frequency on a vertical axis and a wave vector, e.g., k_x, on a horizontal axis, associated with the waveguide 100-1 of Fig. 4B, wherein two zones Z1, Z2 can be identified which correspond with energy gaps or band gaps, also see the transmission gaps tg-1, tg-2 (Fig. 2) according to the principle of the disclosure. In some examples, using the principle according to the disclosure, an energy band enclosed between the two band gaps within the zones Z1, Z2 can be attained, see curve C1 of Fig. 4C, which is comparatively flat, e.g., corresponding with a reduced group velocity and a reduced "group velocity dispersion (GVD)", e.g., over a comparatively large frequency range or energy range, respectively.

In some examples, Fig. 4B, the alternating regions of different refractive index of at least one of the first group G-1 (Fig. 1, 3) or the second group G-2 (Fig. 3) are periodic, may, e.g., have a constant pitch along the longitudinal axis, see, for example, Fig. 4B.

Note, however, that in some other examples (not shown), at least a part of the alternating regions of different refractive index of at least one of the first group or the second group may, at least partly, be aperiodic or may, e.g., not comprise a strict periodic arrangement. In other words, in some examples, a variable pitch - at least to some extent - may also be possible.

In some examples, Fig. 3, at least one of the first group G-1 or the second group G-2 comprises a, for example periodic, grating.

In some examples, the grating comprises a plurality of openings O1, O2 in a waveguide structure or material, see, for example Fig. 4A.

In some examples, Fig. 4A, the first group G-1 comprises a first grating (e.g., realized by the opening O1), wherein the second group G-2 comprises a second grating (e.g., realized by the opening 02). In other words, in some examples, the example unit cell of Fig. 4A may, e.g., be used to provide a waveguide with two different gratings, e.g., when applying the structure of the unit cell of Fig. 4A to a waveguide, see, for example, Fig. 4B.

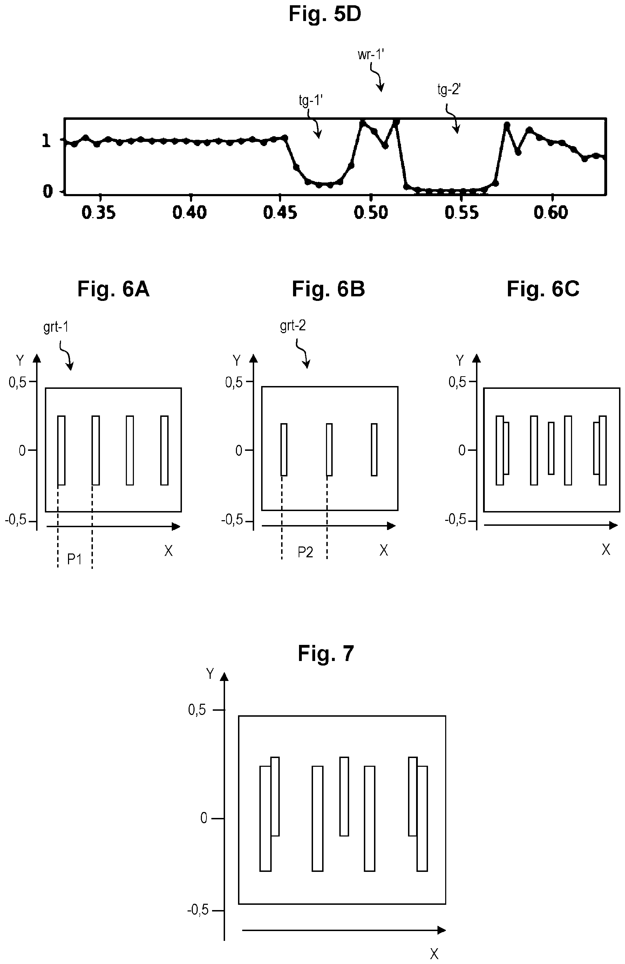

In some examples, the first grating comprises a first pitch, wherein the second grating comprises a second pitch, which is different from the first pitch. Examples for such configurations are explained further below with reference to, e.g., Fig. 6A, 6B, 6C.

In some examples, Fig. 4A, the first grating and the second grating comprise at least one different geometrical property.

In some examples, a geometrical property of at least one of the first grating and the second grating may comprise at least one of: a) a pitch (e.g., distance between two neighboring elements, e.g., openings, of the grating, e.g., along the X-axis), or b) a width, e.g., width of an opening O1, O2, e.g., measured along the longitudinal axis, e.g., characterized by the "X"- coordinate, e.g., X-axis, or c) a length, e.g., length of an opening O1, O2, e.g., measured in a dimension orthogonal to the longitudinal axis, and, e.g., along a surface plane of the waveguide, e.g., characterized by an "Y"-coordinate, e.g., Y-axis, or d) a depth, e.g., of an opening, e.g., measured in a direction orthogonal to the width and the length, e.g., characterized by a "Z"-coordinate (e.g., perpendicular to a drawing plane of Fig. 4A), or e) a shift, e.g., along the length coordinate, e.g., Y-axis, wherein, for example, a vanishing, e.g. zero, Y-shift may be associated with a symmetric arrangement of the respective grating with respect to the longitudinal axis, and wherein, for example, a non-vanishing Y-shift dy (see Fig. 4A) may be associated with an asymmetric arrangement of the respective grating with respect to the longitudinal axis 102.

Returning to Fig. 4A, it can be seen that the openings O1, O2 each comprise a different width (along the X-axis), same or at least similar length (along the Y-axis), and the non-vanishing Y-shift dy.

In some examples, Fig. 4A, the first grating and the second grating are interleaved, e.g., may at least partly extend along a same coordinate range along at least one of the X-axis or the Y-axis.

In some examples, Fig. 3, at least one of the first group G-1 or the second group G-2 comprises a cladding G-1-clad, G-2-clad.

In some examples, the optical waveguide 100, 100a, 100-1 comprises, e.g., is made using, at least one of the following technologies: a) thin-film Lithium Niobate, or b) Indium Phosphide, or c) Silicon Photonics.

In the following, further aspects and examples are disclosed, which, in some examples, may be combined with at least one of the aspects and/or examples disclosed above.

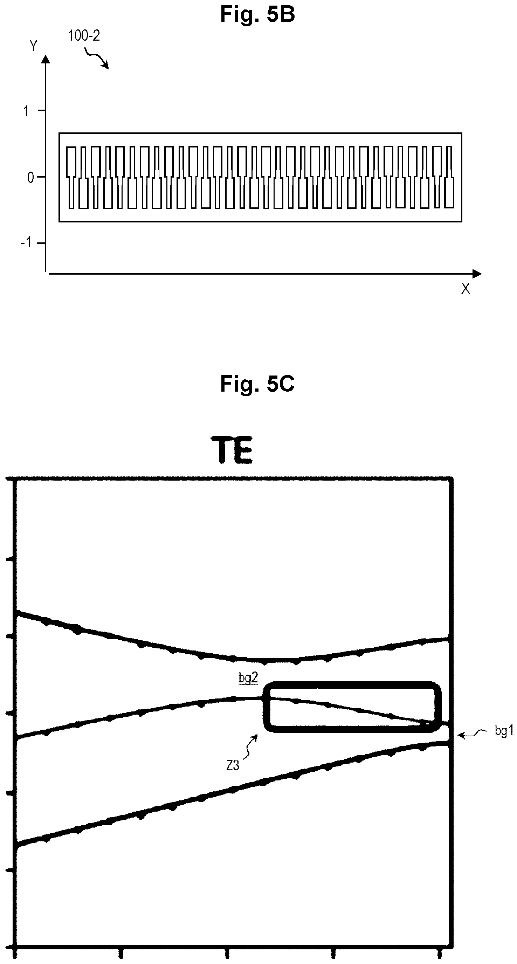

Fig. 5A depicts an example of a unit cell characterizing regions of different refractive index, which, in some examples, may, e.g., be implemented in the form of openings within the waveguide. As can be seen from Fig. 5A, the unit cell comprises two openings O1', O2'. In some examples, Fig. 5A, the openings O1', O2' effect a local change of the refractive index along the X-axis of a waveguide 100-2, see Fig. 5B, which comprises a plurality of the unit cells of Fig. 5A, e.g., to form at least one group G-1, G-2 of alternating regions of different refractive index arranged along the longitudinal axis 102 of the waveguide 100-1.

Fig. 5C depicts an example dispersion diagram associated with the waveguide 100-2 of Fig. 5C, wherein two open band gaps bg1, bg2 can be identified, e.g., corresponding with the transmission gaps tg-1, tg-2 of Fig. 2. In some examples, the frequencies, e.g., energies enclosed between the gaps show an increased group velocity and a comparatively low dispersion, e.g., over a comparatively large energy band, see the marked zone Z3 of Fig. 5C.

In some examples, the configuration of the waveguide 100-2, e.g., a non-symmetric waveguide 100-2, can be realized by providing two different alternating gratings, e.g., side by side, wherein, in some examples, Fig. 5A, a first grating is associated with, e.g., implemented in, a region of the Y-axis ranging between 0 and 0.5, wherein a second grating is associated with, e.g., implemented in, a region of the Y-axis ranging between -0.5 and 0.

Fig. 5D schematically depicts a transmission spectrum for the waveguide 100-2 of Fig. 5B, wherein the two non-adjacent transmission gaps tg-1', tg-2', which are effected by the gratings explained above with reference to Fig. 5A, 5B, can be identified. The arrow wr-1' symbolizes an intermediate wavelength range between the two transmission gaps tg-1', tg-2', in which a slow-light regime is enabled according to the principle of the disclosure.

Fig. 6A schematically depicts a grating, e.g., a unit cell with a grating, according to some examples, comprising four openings having a respective pitch of P1. Fig. 6B schematically depicts a grating, e.g., a unit cell with a grating, according to some examples, comprising three openings having a respective pitch of P2. Fig. 6C schematically depicts a grating, e.g., a unit cell with a grating, according to some examples, which can be obtained by combining the two gratings or unit cells of Fig. 6A, 6B. In some examples, the grating or unit cell of Fig. 6C can be used to form respectively alternating regions of different refractive index arranged along the longitudinal axis 102 of the waveguide 100 (Fig. 1) effecting two transmission gaps tg-1, tg-2 in the transmission spectrum TS of the waveguide.

In some examples, thus, the configuration of Fig. 6C can, e.g., be used to provide the two groups G-1, G-2 (Fig. 3), wherein, for example, the grating of Fig. 6A can be used to form the first group G-1, and wherein the grating of Fig. 6B can be used to form the second group G-2.

Fig. 7 schematically depicts a unit cell with gratings as may be obtained based on the unit cells of Fig. 6A and Fig. 6B, wherein the grating of Fig. 6B has been shifted along a positive Y-axis direction for combing with the grating of Fig. 6A, e.g., to form the resulting gratings of Fig. 7. In some examples, the grating or unit cell of Fig. 7, too, can be used to form respectively alternating regions of different refractive index arranged along the longitudinal axis 102 of the waveguide 100 (Fig. 1) effecting two transmission gaps tg-1, tg-2 in the transmission spectrum TS of the waveguide.

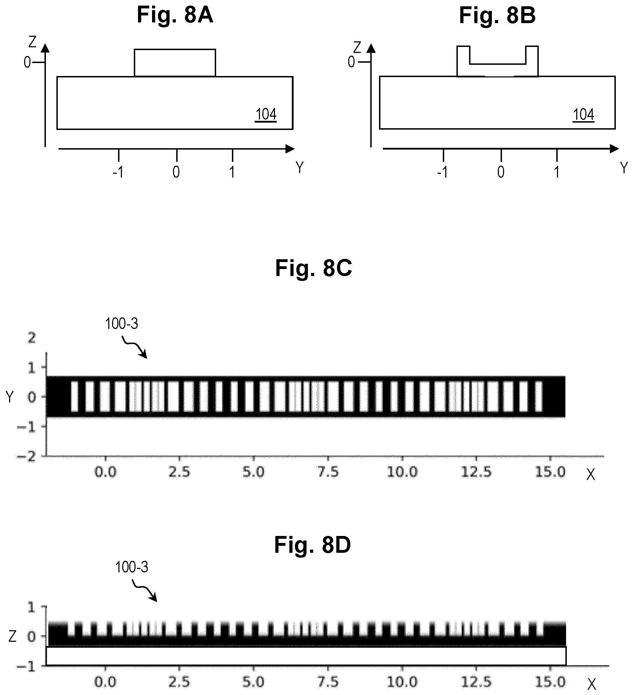

Fig. 8A, 8B, 8C, 8D depict aspects of a waveguide 100-3 (Fig. 8C) according to some examples, wherein two gratings or grating patterns, respectively, are combined, e.g., superposed, to form alternating regions of different refractive index arranged along the longitudinal axis 102 of the waveguide 100-3.

Fig. 8A depicts an example schematic cross-section of the waveguide 100-3 of Fig. 8C at an X-coordinate of X=-3.0. Fig. 8B depicts an example schematic cross-section of the waveguide 100-3 of Fig. 8C at an X-coordinate of X=0.65. By comparing Fig. 8A with Fig. 8B, it can be seen that the openings of the combined gratings of the waveguide 100-3 are no through-holes, but rather represent blind holes. In other words, the openings of the combined gratings of the waveguide 100-3 do not extend through the extension of the waveguide 100-3 along the Z-axis, also see the top view of Fig. 8C. Fig. 8D depicts a schematic cross-sectional side view at the coordinate Y=0. However, in some examples, at least some openings of at least one grating or at least some gratings may be configured as through-holes.

In some examples, the openings of the waveguide 100-3 may be manufactured by etching, e.g., by providing first periodic etchings with a first pitch of, e.g., 0.49 micrometer, µm, and by providing second periodic etchings with a second pitch of, e.g., 0.54 µm. In some examples, apart from the pitch, one or more, e.g., all, other geometric parameters of the gratings such as, e.g., width, or length, or depth, or Y-shift (presently zero)) may be equal for both gratings.

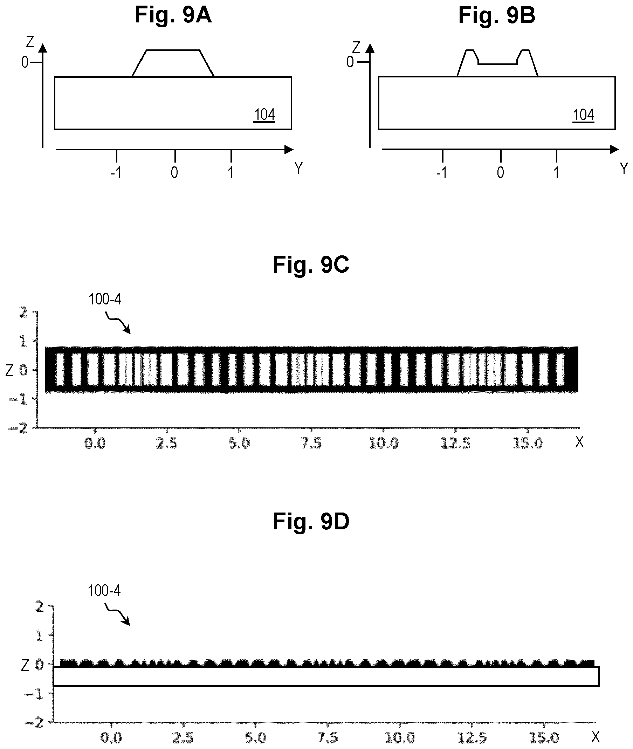

Fig. 9A, 9B, 9C, 9D depict aspects of a waveguide 100-4 (Fig. 9C) according to some examples, wherein two gratings or grating patterns, respectively, are combined, e.g., superposed, to form alternating regions of different refractive index arranged along the longitudinal axis 102 of the waveguide 100-4, e.g., similar to the configuration of Fig. 8A, 8B, 8C, 8D. In difference to the Fig. 8 configuration, the configuration of Fig. 9A, 9B, 9C, 9D depicts openings as may be obtained by an etching process working, e.g., at an angle of, e.g., 30°, which, in some examples may, e.g., be used for thin-film Lithium Niobate systems, e.g., modulators.

Some examples, Fig. 10, relate to an electro-optic modulator, e.g., of the Mach-Zehnder type, comprising at least one optical waveguide 100-5, 100-6 according to the disclosure. The modulator 10 comprises a splitter 12 for power dividing an input signal, and a combiner 14 for combining the split input signal portions after having travelled through two arms of the modulator 10, wherein, in some examples, each of the two arms comprises a respective optical waveguide 100-5, 100-6 according to the embodiments. Reference sign 16 collectively symbolizes one or more electrodes for applying electric control signals to the modulator 10, e.g., for applying a modulation onto the optical signal processed by the modulator 10. When using the principle according to the invention, the efficiency of the modulator 10 can be increased, as, e.g., compared to conventional approaches, which, in some examples, may enable to provide a comparatively small configuration.

In the following, further aspects and examples are disclosed, which, in some examples, may be combined with at least one of the aspects and/or examples disclosed above.

In some examples, the principle according to the disclosure may be implemented by breaking a symmetry, e.g., of the waveguide, e.g., in the Y plane (e.g., a plane parallel to a substrate 104 (Fig. 1)), e.g., to provide a second energy gap, e.g., transmission gap tg-2 (Fig. 2), e.g., at higher energies, e.g., as compared to the first transmission gap tg-1. In some examples, by providing, e.g., engineering, both transmission gaps tg-1, tg-2, it is possible to obtain a comparatively broad energy range, e.g., with reduced group velocity. With respect to some conventional solutions, in some examples, this enables a slow-wave regime (and thus, e.g., a comparatively, e.g., greatly, increased modulation efficiency, e.g., when using the waveguide for an electro-optic modulator) in a much broader optical bandwidth.

In some examples, e.g., by breaking the symmetry on the Y-plane of the waveguide, it is possible to open a second band gap in the dispersion diagram (see Fig. 4C, zone Z1), which, e.g., happens at a crossing of the TE0 and TE1 dispersion curves.

In some examples, realizing periodic alternating regions of different refractive indices along the propagation direction may be attained by providing, e.g., etching, holes into the waveguide. In some examples, this effect can be obtained in multiple different ways (e.g., by realizing the waveguide in alternating materials (e.g., with different refractive indices) instead, or with a waveguide of periodically alternating width and/or thickness).

In some examples, a patterned cladding may be applied, e.g., added, to the waveguide, e.g., to achieve alternating regions of different refractive indices along the propagation direction.

In some examples, e.g., practical ways of implementing the principle according to the disclosure, e.g., optionally combined with a break of a symmetry, e.g., with respect to the Y-plane, may comprise at least one of the following: a) shifting at least one grating toward one edge of the waveguide (as in the examples of Fig. 4A above), e.g., applying a non-vanishing Y-shift dy (Fig. 4A), or b) employing two or more (optionally interleaved) gratings with different phase (e.g., 180 degrees, or other value(s)) and/or geometrical properties (see, for example, Fig. 4B, 5B, 6C, 7, 8C, 9C), or c) providing, e.g., adding a cladding G-1-clad, G-2-clad (Fig. 3), e.g., cladding material, e.g., on one half, e.g., only one half, of the waveguide, or d) interleaving gratings with different pitch, see, for example, Fig. 6C, 7.

As an example, Fig. 11 depicts a top view of a waveguide 100-7 comprising a first group G-1 of alternating regions of different refractive index arranged along a longitudinal axis 102 of the waveguide 100-7 effecting two transmission gaps tg-1, tg-2 (Fig. 2) in a transmission spectrum TS of the waveguide 100-7. With the present example, this is attained by breaking a symmetry with respect to the Y-plane by adding the cladding material CM onto a part of the waveguide, presently, e.g., a region associated with positive Y coordinates, e.g., above the dashed line 102 of Fig. 11.

In some examples, e.g., with respect to some conventional approaches, the principle according to the embodiments enables to ensure a slow-wave regime (and thus, e.g., a greatly increased modulation efficiency, e.g., when using the waveguide according to the examples in an MZM), e.g., in a comparatively broad optical bandwidth.

## Claims

1. An optical waveguide (100; 100a) comprising at least a first group (G-1) of alternating regions of different refractive index arranged along a longitudinal axis (102) of the waveguide (100; 100a) effecting two transmission gaps (tg-1, tg-2) in a transmission spectrum (TS) of the waveguide (100; 100a).

2. The optical waveguide (100; 100a) of claim 1, wherein the two transmission gaps (tg-1, tg-2) are within a predetermined wavelength range (wr-pred).

3. The optical waveguide (100; 100a) of any of the preceding claims, wherein the two transmission gaps (tg-1, tg-2) are separate from each other.

4. The optical waveguide (100a) of any of the preceding claims, further comprising a second group (G-2) of alternating regions of different refractive index arranged along the longitudinal axis (102) of the waveguide (100; 100a).

5. The optical waveguide (100; 100a) of any of the preceding claims, wherein at least one of the first group (G-1) or the second group (G-2) is asymmetric with respect to the longitudinal axis (102).

6. The optical waveguide (100; 100a) of any of the preceding claims, wherein the alternating regions of different refractive index of at least one of the first group (G-1) or the second group (G-2) are periodic.

7. The optical waveguide (100; 100a) of any of the preceding claims, wherein at least one of the first group (G-1) or the second group (G-2) comprises a, for example periodic, grating.

8. The optical waveguide (100; 100a) of claim 7, wherein the grating comprises a plurality of openings (O1, O2; O1', O2') in a waveguide structure.

9. The optical waveguide (100a) of any of the claims 4 to 8, wherein the first group (G-1) comprises a first grating (grt-1), wherein the second group (G-2) comprises a second grating (grt-2).

10. The optical waveguide (100a) of claim 9, wherein the first grating (grt-1) comprises a first pitch (P1), wherein the second grating (grt-2) comprises a second pitch (P2), which is different from the first pitch (P1).

11. The optical waveguide (100a) of any of the claims 9 to 10, wherein the first grating (grt-1) and the second grating (grt-2) comprise at least one different geometrical property.

12. The optical waveguide (100a) of any of the claims 9 to 11, wherein the first grating (grt-1) and the second grating (grt-2) are interleaved.

13. The optical waveguide (100; 100a) of any of the preceding claims, wherein at least one of the first group (G-1) or the second group (G-2) comprises a cladding (G-1-clad, G-2-clad; CM).

14. The optical waveguide (100; 100a) of any of the preceding claims, comprising at least one of the following technologies: a) thin-film Lithium Niobate, or b) Indium Phosphide, or c) Silicon Photonics.

15. An electro-optic modulator (10) comprising at least one optical waveguide (100; 100-5, 100-6) according to any of the preceding claims.
